# EUROPÄISCHE PATENTANMELDUNG

(11) **EP 1 462 178 A2**
(43) Veröffentlichungstag der Anmeldung: **29.09.2004**
(21) Anmeldenummer: 04004920.7
(22) Anmeldetag: 03.03.2004
(51) Int. Cl.: B04B 9/12

(54) **Lagerung einer Antriebsspindel eines Separators**

(30) Priorität: 28.03.2003 DE 10314118
(71) Anmelder: Westfalia Separator AG, 59302 Oelde (DE)
(72) Erfinder: Mackel, Wilfried, 59302 Oelde (DE); Tietz, Helga, 59202 Oelde (DE)
(74) Vertreter: Specht, Peter, Dipl.-Phys.

(57) **Zusammenfassung**

Eine Antriebsvorrichtung (1) für einen Separator mit einer Schleudertrommel mit vertikaler Drehachse, die eine vertikal ausgerichtete Antriebsspindel (2) für eine hier nicht dargestellte Schleudertrommel aufweist, welche auf die Antriebsspindel (2) aufgesetzt ist, wobei die Antriebsspindel (2) mittels eines oberen Halslagers (3) und eines unteren Fußlagers (4) insbesondere in einer Öffnung (14) eines Antriebsgehäuses (5) gelagert ist und wobei das Halslager axial starr und radial federnd am Maschinengehäuse (5) abgestützt ist, zeichnet sich dadurch aus, dass das Halslager (3) als Schrägkugellager ausgebildet ist und dass das Halslager (3) die Schleudertrommel nach unten hin auf einer kugelflächenförmigen Abstützfläche des Maschinengehäuses (2) abstützt.

## Beschreibung

Die Erfindung betrifft eine Antriebsvorrichtung für einen Separator nach dem Oberbegriff des Anspruches 1.

Derartige Antriebsvorrichtungen sind in verschiedensten Anordnungen bekannt, so beispielsweise aus der DE 37 14 627, welche eine Anordnung zeigt, bei welcher eine Schleudertrommel auf das obere freie Ende einer Antriebsspindel aufgesetzt ist, die unterhalb der Schleudertrommel mittels eines oberen Halslagers und eines unteren Fußlagers an einem Antriebsgehäuse bzw. dessen Abstützelementen drehbar gelagert ist.

Zum Stand der Technik werden noch die WO 98/5 77 52 A1, die DE 34 32 833 A1 und die bezüglich ihrer Gattung weiter ab liegenden GB 255,437, welche Lagerabstützungen auf spährisch geformten Flächen offenbart, sowie die DE 175341 C und die AT 110574 genannt.

Der Antriebsmotor kann unterhalb der eigentlichen Antriebsspindel oder über einen Riemenantrieb seitlich versetzt dazu angeordnet sein. In dieser Anordnung stützt sich das obere Halslager federnd am Antriebsgehäuse ab, es kann daher bei Präzessionsbewegungen u.dgl. der Antriebsspindel deren radiale Bewegung mit durchführen.

Das Gewicht der Schleudertrommel ist in axialer Richtung über das Fußlager am Antriebsgehäuse abgestützt. Das Fußlager ist in radialer Richtung an Antriebsgehäuse fixiert.

Eine vergleichbare Anordnung ist aus der DE 844 233 bekannt, wobei dort zur Sicherung der radialen Beweglichkeit eines der Lager nach oben hin in einer Art Kugelauflagefläche abgestützt wird.

Aus der DE 62 687 ist zudem bekannt, das Trommelgewicht unterhalb des Halslagers abzustützen.

Der Einsatz von Schrägkugellagern zur Lagerung von Antriebsspindeln ist beispielsweise aus der CH 484 873 bekannt. Es ist ferner aus dieser Schrift bekannt, die Abstützung des Lagers in radialer Richtung relativ zum Antriebsgehäuse mittels Gummielementen durchzuführen.

Aus der DE 1 031 222 ist zudem bekannt, unterhalb des Fußlagers das Trommelgewicht axial in einer Art Kugelkalotte abzustützen.

Zum Stand der Technik seien ferner noch die DE 31 25 832 sowie die EP 0 131 494 und die DE 34 32 833 A1 angegeben. Die letztgenannte Schrift zeigt wiederum den Einsatz von Schrägkugellagern sowie die Anordnung von Kugelkalotten zur Abstützung der Antriebsspindel oberhalb des Fußlagers.

Die Erfindung hat gegenüber der DE 37 14 627, welche den gattungsgemäßen Stand der Technik angibt, die Aufgabe, eine kostengünstig herstellbare Antriebsvorrichtung für Separatoren mit vertikaler Schleudertrommel zu realisieren, welche sich durch ein gutes maschinendynamisches Verhalten auszeichnet.

Die Erfindung löst diese Aufgabe durch den Gegenstand des Anspruches 1.

Danach ist unter Beibehaltung der radial federnden Abstützung des Halslagers am Maschinengehäuse dieses als Schrägkugellager ausgebildet, welches die Schleudertrommel nach unten hin auf einer kugelförmigen Abstützfläche des Maschinengehäuses abstützt. Die gewählte Art der Abstützung der Schleudertrommel lässt sich besonders kostengünstig realisieren. Durch die Konstruktion wird ferner ein hervorragendes maschinendynamisches Verhalten realisiert, da problemlos die Möglichkeit zu einer maschinendynamischen Entkopplung des Motors vom Lagersystem der Antriebsspindel bzw. der Schleudertrommel besteht. Denkbar sind derart etwa ein Direktantrieb, ein Antrieb über ein Getriebe oder über eine Riemenscheibe.

Bevorzugt liegt der Mittelpunkt der kugelflächenförmigen Abstützfläche im Bereich des Fußlagers, insbesondere in dessen Mitte. Hiermit wird der Drehpunkt der Präzessionsbewegung vorteilhaft an eine axiale Position der Antriebsspindel gelegt, in welcher diese über das Fußlager abgestützt ist.

Bevorzugt stützt sich das Halslager innen und nach oben hin an der Antriebsspindel sowie nach unten außen hin an einem äußeren Halslagerring ab.

Der Halslagerring kann wiederum an seiner Unterseite kugelförmig ausgebildet sein und auf einem komplementär kugelabschnittsartig geformten Auflagebund des Antriebsgehäuses aufliegen. Auf diese Weise wird mit besonders wenigen Komponenten preisgünstig die gem. dem Hauptanspruch geforderte kugelflächenförmige Abstützung der Schleudertrommel über das Halslager am Maschinengehäuse realisiert.

Es bietet sich an, wenn zwischen dem Außenumfang des Halslagerrings und dem Innenumfang des Antriebsgehäuses ein Spalt ausgebildet ist. In diesem läßt sich die Anordnung einer Feder zur radial federnden Abstützung des Halslagers am Maschinengehäuse einfach realisieren.

Besonders zweckmäßig ist es dabei, wenn den Spalt ein Dicht- und Federring überbrückt. Eine besonders kostengünstige Realisierungsmöglichkeit des Federelements stellt dabei ein O-Ring dar, der in einer Nut am Außenumfang des Halslagerrings angeordnet ist, aus der er radial nach außen vorsteht. Die Abstützung wird dabei ebenfalls in einfachster Weise radial durch den O-Ring realisiert. Das Gummimaterial unterstützt die Reibdämpfung auf der Kugelfläche durch die ihm eigenen Eigenschaften.

Die vorstehend genannten bevorzugten Ausführungsformen ergänzen sich insgesamt zu einer einfachen Bauweise der Antriebsvorrichtung mit minimaler Teileanzahl und der vorteilhaften Maßnahme der axialen Trommelsitzaufnahme im oberen Lager. Dabei erfolgt eine automatische selbsttätige Reibdämpfung durch das Trommelgewicht (Halslagerring reibt mit der durch das Trommelgewicht verursachten Kraft axial auf dem Maschinengehäuse bzw. Maschinengestell). Somit ist der Antrieb derart ausgelegt, dass bei schweren Schleudertrommeln mehr Dämpfung erzeugt wird als bei leichteren Schleudertrommeln.

Ergänzt werden kann die vorstehend genannte Anordnung vorzugsweise durch die Maßnahme, daß die Abstützfläche des Halslagerrings am Antriebsgehäuse mit einem Schmiersystem zur Schmierung des Halslagers in Wirkverbindung steht, so daß die sowieso vorzusehende Schmierung bzw. das Schmiersystem zur Schmierung des Halslagers kostengünstig und in einfachster Weise mit zur Schmierung der Abstützfläche des Antriebsgehäuse genutzt werden kann.

Vorteilhafte Ausgestaltungen sind in den Unteransprüchen angegeben.

Nachfolgend wird die Erfindung anhand eines Ausführungsbeispiels unter Bezug auf die Zeichnung näher beschrieben. Es zeigt:
Fig. 1 einen Schnitt durch eine Antriebsvorrichtung (ohne eine Darstellung des Antriebsmotors); und
Fig.2 eine Ausschnittsvergrößerung aus Fig. 1.

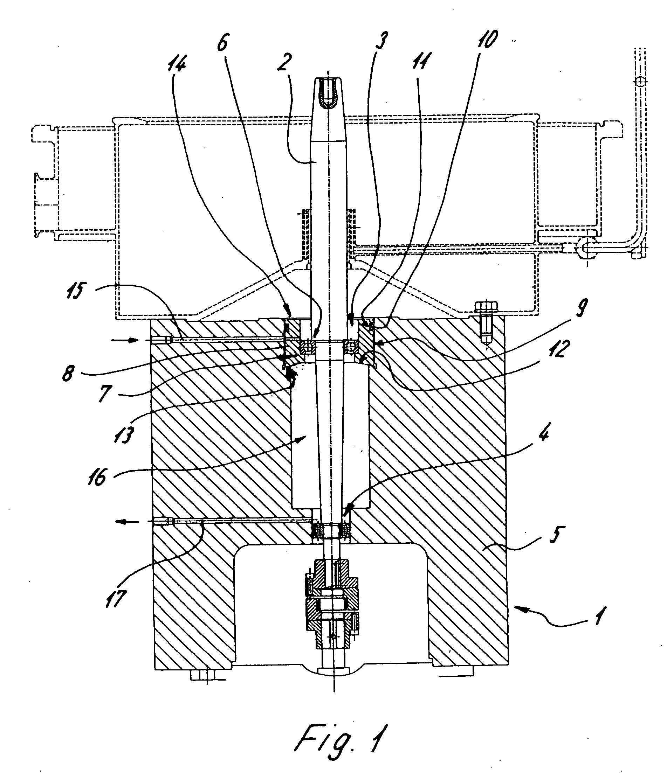

Fig. 1 zeigt eine Antriebsvorrichtung 1 für einen Separator mit vertikaler Drehachse, die eine vertikal ausgerichtete Antriebsspindel 2 für eine hier nicht dargestellte Schleudertrommel aufweist, welche in Fig. 1 auf das obere konische Ende der Antriebsspindel 2 aufgesetzt ist.

Die Antriebsvorrichtung umfasst zum Antrieb der Antriebsspindel 2 einen hier nicht dargestellten Motor, welcher sich hier beispielhaft direkt nach unten hin über eine nahe unterhalb des Drehpunktes M der Präzessionsbewegung angeordnete Kupplung 18 an das untere Ende der Antriebsspindel anschließen kann oder der die Antriebsspindel 2 indirekt, z.B. über einen Riementrieb (hier ebenfalls nicht dargestellt) und/oder ein Getriebe antreibt.

Die Antriebsspindel 2 ist mittels eines Halslagers 3 und eines Fußlagers 4 in einer bohrungsartigen Öffnung 14 eines ein- oder mehrteiligen Antriebsgehäuse 5 gelagert.

Das Halslager 3 ist axial starr bzw. unbeweglich fixiert und radial beweglich angeordnet. Das Fußlager 4 ist dagegen im Antriebsgehäuse 5 fixiert angeordnet und axial beweglich als Loslager ausgebildet, wobei hier ein Pendelkugellager eingesetzt wird.

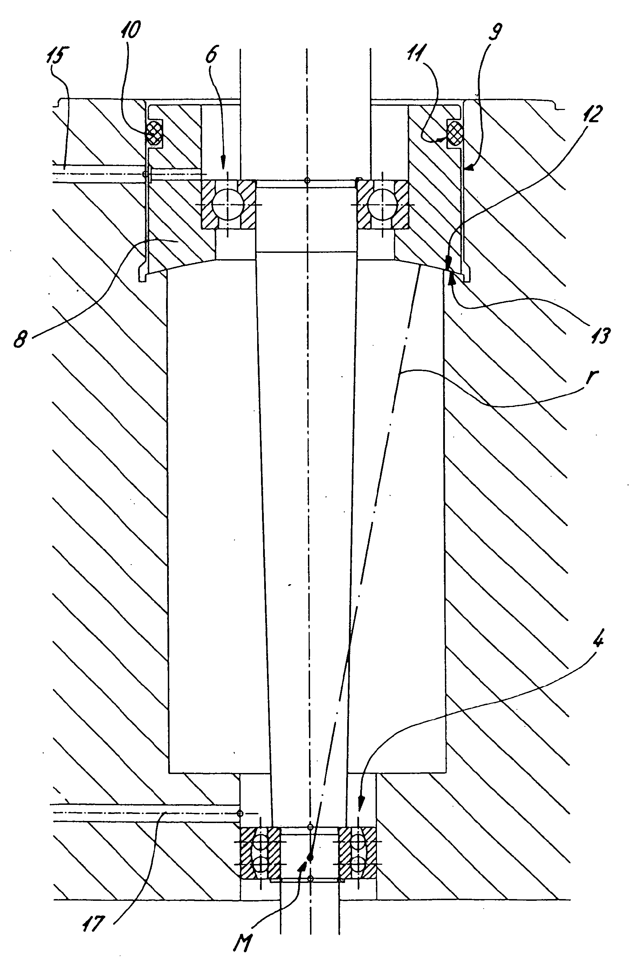

Nach Fig. 1 und 2 ist das Halslager 3 vorteilhaft als Schrägkugellager ausgebildet. Dieses stützt sich im Bereich des oberen Innenumfangs (innerer oberer Eckbereich) an einer oberen Stufung bzw. einem Absatz 6 der Antriebsspindel 2 und im diametral gegenüberliegenden, also dem äußeren, unteren Umfangs- bzw. Eckbereich an einer unteren Stufung bzw. einem Absatz 7 eines das Schrägkugellager an dessen Außenumfang umgebenden Halslagerrings 8 ab.

Zwischen dem Außenumfang des Halslagerrings 8 und dem Innenumfang des Antriebsgehäuses 5 ist ein Spalt 9 ausgebildet, so dass sich die Spindel 2 mit etwas Spiel radial bewegen kann. Den Spalt 9 überbrückt federnd ein Dicht- und Federring 10 - hier ein besonders kostengünstiger O-Ring - welcher hier in einer Nut 11 am Außenumfang des Halslagerringes 8 angeordnet ist, aus der er nach außen vorsteht. Der O-Ring realisiert in einfachster Weise eine radiale Abstützung des Trommelgewichts. Im O-Ring zentriert zudem die Antriebsspindel 2, so dass der O-Ring die radialen Bewegungen der Antriebsspindel und des Halslagers 3 erlaubt. Weitere und/oder alternative Federanordnungen sind denkbar, aber nicht unbedingt erforderlich.

Der Halslagerring 8 ist an seiner Unterseite 12 kugelpfannenartig ausgebildet und liegt auf einem komplementär kugelabschnittsartig (Oberflächenabschnitt einer Kugel mit dem Radius "R" mit dem Mittelpunkt M im axialen Bereich des Fußlagers Halslagers 4) geformten Auflagebund 13 des Antriebsgehäuses 5 auf. Damit kann sich der Halslagerring 8 aufgrund des Spaltes 9 um seinen Außenumfang mit einem entsprechenden Spiel auf dem kugelpfannenartigen Auflagebund 13 verschieben. Derart erfolgt mit geringen konstruktiven Mitteln eine axiale Trommelgewichtsaufnahme im oberen Lager, dem Halslager 3. Der Mittelpunkt M der Präzessionsbewegung liegt dadurch ebenfalls im Bereich des Fußlagers 4, insbesondere in dessen Mitte.

Zur Realisierung eines Schmiersystems mündet eine erste Bohrung 15 - eine Schmierbohrung für ein Schmiermittel wie Öl oder Fett - in den Bereich um die Antriebsspindel 2 oberhalb des Halslagers 3. Die beiden Lager - das Halslager 3 und das Fußlager 4 - sind durch einen Kanal 16 verbunden, welcher hier als Ringkanal einen Teil der Bohrung 14 darstellt. Dadurch sind beide Lager 3, 4 bei einem Einsatz von Öl als Schmiermittel mit geringem Aufwand gemeinsam schmierbar. Die Ableitung des Öls kann nach unten hin erfolgen (hier nicht dargestellt).

Direkt unterhalb des Halslagers 3 erfolgt durch das Schmiersystem zur Schmierung des Halslagers 3 auch eine Schmierung der Abstützfläche der Antriebsfläche an der kugelabschnittsartigen Auflagefläche 13 des Antriebsgehäuses 5. Eine zweite Schmierbohrung 17 für das Fußlager 4 kann ergänzend Fett direkt zum Fußlager leiten.

### Bezugszeichen

- Antriebsvorrichtung: 1
- Antriebsspindel: 2
- Halslager: 3
- Fußlager: 4
- Antriebsgehäuse: 5
- obere Stufung: 6
- untere Stufung: 7
- Halslagerring: 8
- Spalt: 9
- Dicht- und Federring: 10
- Nut: 11
- Unterseite: 12
- Auflagebund: 13
- Öffnung: 14
- erste Schmierbohrung: 15
- Ringkanal: 16
- zweite Schmierbohrung: 17
- Kupplung: 18

## Patentansprüche

1. Antriebsvorrichtung (1) für einen Separator mit einer Schleudertrommel mit vertikaler Drehachse,
a) die eine vertikal ausgerichtete Antriebsspindel (2) für eine hier nicht dargestellte Schleudertrommel aufweist, welche auf die Antriebsspindel (2) aufgesetzt ist,
b) wobei die Antriebsspindel (2) mittels eines oberen Halslagers (3) und eines unteren Fußlagers (4) insbesondere in einer Öffnung (14) eines Antriebsgehäuses (5) gelagert ist
c) und wobei das Halslager axial starr und radial federnd am Maschinengehäuse (5) abgestützt ist,
**dadurch gekennzeichnet, dass**
d) das Halslager (3) als Schrägkugellager ausgebildet ist,
e) das Halslager (3) die Schleudertrommel nach unten hin auf einer kugelflächenförmigen Abstützfläche des Maschinengehäuses (2) abstützt.

2. Antriebsvorrichtung nach Anspruch 1, **dadurch gekennzeichnet, dass** sich das Halslager (3) innen nach oben hin an der Antriebsspindel (2) und nach unten nach außen hin an einem äußeren Halslagerring (8) abstützt.

3. Antriebsvorrichtung nach einem der vorstehenden Ansprüche, **dadurch gekennzeichnet, dass** der Halslagerring (8) an seiner Unterseite (12) kugelpfannenartig ausgebildet ist und auf einem komplementär kugelabschnittsartig geformten Auflagebund (13) des Antriebsgehäuses (5) aufliegt und derart die kugelflächenförmigen Abstützfläche.

4. Antriebsvorrichtung nach einem der vorstehenden Ansprüche, **dadurch gekennzeichnet, dass** der Mittelpunkt der kugelflächenförmigen Abstützfläche im Bereich des Fußlagers (4), insbesondere in dessen Mitte, liegt.

5. Antriebsvorrichtung nach einem der vorstehenden Ansprüche, **dadurch gekennzeichnet, dass** die kugelflächenförmige Abstützfläche zur gewichtskraftabhängigen Reibdämpfung der Antriebsvorrichtung genutzt wird.

6. Antriebsvorrichtung nach einem der vorstehenden Ansprüche, **dadurch gekennzeichnet, dass** die kugelflächenförmige Abstützfläche zur gewichtskraftabhängigen Reibdämpfung der Antriebsvorrichtung genutzt wird.

7. Antriebsvorrichtung nach einem der vorstehenden Ansprüche, **dadurch gekennzeichnet, dass** zwischen dem Außenumfang des Halslagerrings (8) und dem Innenumfang des Antriebsgehäuses (5) ein Spalt (9) ausgebildet ist.

8. Antriebsvorrichtung nach einem der vorstehenden Ansprüche, **dadurch gekennzeichnet, dass** den Spalt (9) ein Dicht- und Federring (10) überbrückt.

9. Antriebsvorrichtung nach einem der vorstehenden Ansprüche, **dadurch gekennzeichnet, dass** der Dicht- und Federring (10) als O-Ring ausgebildet ist, welcher vorzugsweise in einer Nut (11) am Außenumfang des Halslagerringes (8) angeordnet ist, aus der er radial nach außen vorsteht.

10. Antriebsvorrichtung nach einem der vorstehenden Ansprüche, **dadurch gekennzeichnet, dass** das Fußlager (4) radial im Antriebsgehäuse (5) fixiert und axial als Loslager ausgebildet ist.

11. Antriebsvorrichtung nach einem der vorstehenden Ansprüche, **dadurch gekennzeichnet, dass** die Abstützfläche des Halslagerringes am Antriebsgehäuse (5) mit einem Schmiersystem zur Schmierung des Halslagers (3, 4) in Wirkverbindung steht.

12. Antriebsvorrichtung nach einem der vorstehenden Ansprüche, **dadurch gekennzeichnet, dass** das Halslager (3) und das Fußlager (4) durch einen Kanal (16), insbesondere einen Ringkanal um die Antriebsspindel, miteinander verbunden sind, so dass die beiden Lager (3, 4) gemeinsam schmierbar sind.

13. Antriebsvorrichtung nach einem der vorstehenden Ansprüche, **dadurch gekennzeichnet, dass** eine Schmierbohrung für ein Schmiermittel wie Öl oder Fett in den Bereich um die Antriebsspindel (2) oberhalb des Halslagers (3) mündet.

14. Antriebsvorrichtung nach einem der vorstehenden Ansprüche, **dadurch gekennzeichnet, dass** eine zweite Schmierbohrung (17) für das Fußlager (4) vorgesehen ist.
